# EUROPÄISCHE PATENTSCHRIFT

(11) **EP 0 464 399 B1**
(45) Veröffentlichungstag und Bekanntmachung des Hinweises auf die Patenterteilung: **22.06.1994**
(21) Anmeldenummer: 91109427.4
(22) Anmeldetag: 08.06.1991
(51) Int. Cl.: F16G 3/04, F16G 3/16

(54) **Riemenverbinder zum Verbinden der Bandenden von Transportbändern oder dergleichen**
Belt fastener for joining the ends of a conveyor belt or the like
Attache pour joindre les extrémités d'une courroie, par exemple d'une courroie transporteuse

(30) Priorität: 27.06.1990 FR 9008079
(43) Veröffentlichungstag der Anmeldung: 08.01.1992
(73) Patentinhaber: GORO S.A., F-77506 Chelles Cedex (FR)
(72) Erfinder: Schick, Jean-Francois, F-75 016 Paris (FR)
(74) Vertreter: Honke, Manfred, Dr.-Ing.

(56) Entgegenhaltungen:
- FR-A- 844 752
- FR-A- 1 101 708
- FR-A- 1 313 653
- FR-E- 71 794
- FR-E- 72 456
- US-A- 3 261 085

## Beschreibung

Die Erfindung betrifft einen Riemenverbinder zum Verbinden der Bandenden von Transportbändern oder dergleichen, aus in Reihe angeordneten Verbinderklammern mit jeweils einem U-förmigen Querschnitt unter Bildung von zwei das betreffende Bandende zwischen sich aufnehmende Befestigungsschenkeln und mit zumindest einem die Befestigungsschenkel verbindenden Scharnierbogen zur Aufnahme eines Scharnierstabes, wobei die Befestigungsschenkel fluchtende Eintreiblöcher zum Eintreiben von U-förmigen Befestigungskrampen aufweisen, welche das betreffende Bandende durchdringen und wobei die Eintreiblöcher über zur Bandlängsachse schräggestellte rillenartige Einformungen zur Aufnahme der Krampenrücken und der nach dem Eintreiben umgebogenen Krampenspitzen paarweise miteinander verbunden sind.

Die in-situ-Befestigung von Riemenverbindern bwz. Verbinderklammern der vorgenannten Art erfolgt in Verbindung mit U-förmigen Befestigungskrampen aus Metalldraht. Dabei dringen beide Krampenschenkel durch die Eintreiblöcher des einen Befestigungsschenkels, danach durch das Transportband und durch mit den vorgenannten Eintreiblöchern fluchtende Eintreiblöcher im gegenüberliegenden anderen Befestigungsschenkel hindurch und treten aus diesem Befestigungsschenkel wieder heraus. Das Eintreiben der Befestigungskrampen erfolgt mittels eines Eintreibstempels, der auf den Krampen- rücken aufgelegt wird, wobei die Verbinderklammern dann auf eine als Biegegesenk dienende Auflage aufgesetzt werden. Diese Auflage bzw. das Biegegesenk ist mit Einformungen bzw. Nuten für die Aufnahme der Krampenspitzen versehen, um das Umbiegen und Anpressen dieser Krampenspitzen gegen die Außenfläche des entsprechenden Befestigungsschenkels der jeweiligen Verbinderklammer sicherzustellen.

Damit die auf die Bandenden von Transportbändern aufgesetzten Riemenverbinder an Ort und Stelle sicher befestigt werden können, ist die Verwendung von Eintreibvorrichtungen oder -maschinen erforderlich, die mit sehr hohen Drucken beaufschlagt werden, um die Bördelverbindung der Krampenspitzen auf den Verbinderklammern sicherzustellen. Dies erfordert den Einsatz von relativ komplizierten und teuren Maschinen.

Die FR-PS 71 794 beschreibt einen Riemenverbinder, bei welchem die Befestigungskrampen quer zur Bandlängsrichtung angeordnet sind. Die Einformung in dem inneren Befestigungsschenkel weist zwei Eintrittslöcher und ein Austrittsloch für die umgebogenen Krampenspitzen auf, nimmt also zwei Krampenspitzen einer Befestigungskrampe auf, die gegen das betreffende Bandende zurückgebogen sind. Eine derartige Queranordnung der umgebogenen Krampenspitzen stört empfindlich beim Umlauf über eine Umlenktrommel, so daß ein selbständiges Lockern der Befestigungskrampen und hoher Verschleiß zu befürchten sind. Folglich treten alsbald Beschädigungen auf, aus denen kostenaufwendige Betriebsstörungen resultieren.

Ein gattungsgemäßer Riemenverbinder ist aus der FR-PS 72 456 bekannt, bei dem die Verhältnisse ähnlich liegen. In diesem Fall ist zwar eine Schrägstellung zur Wandlängsachse verwirklicht, jedoch nicht nur für die Krampenrücken, sondern auch für die umgebogenen Krampenspitzen auf der Außenseite des inneren Befestigungsschenkels. Die Schräganordnung der Befestigungskrampen unterscheidet sich nicht wesentlich von der Queranordnung, wie sie aus dem vorbehandelten Dokument bekannt ist.

Die FR-PS 13 13 653 beschreibt einen Riemenverbinder, bei welchem die Befestigungskrampen sowohl in dem äußeren Befestigungsschenkel als auch in dem inneren Befestigungsschenkel in Bandlängsrichtung und folglich -laufrichtung angeordnet sind. In diesem Fall stört jedoch die Tatsache, daß die in Parallelanordnung das betreffende Bandende durchdringenden Befestigungskrampen gleichsam eine Längsspaltung des Bandendes verursachen können, so daß das befestigte Bandende jedenfalls eine erhebliche Schwächung erfährt. Auch das kann zu alsbaldigen Schädigungen und Betriebsstörungen führen, weil eine sichere und dauerhafte Befestigung des Bandendes insbesondere unter Berücksichtigung der in Bandlängsrichtung angreifende Zugbeanspruchungen nicht gewährleistet ist.

Der Erfindung liegt die Aufgabe zugrunde, einen derartigen Riemenverbinder zu schaffen, welcher eine einwandfreie Befestigung und minimale Schwächung des umfassenden Bandendes ebenso wie einen verschleißarmen Bandumlauf gewährleistet, so daß sich das aus scharnierartig ineinandergreifenden Riemenverbindern gebildete Riemenverbinderschloß durch hohe Lebensdauer auszeichnet.

Diese Aufgabe löst die Erfindung bei einem gattungsgemäßen Riemenverbinder dadurch, daß die Einformungen in dem äußeren Befestigungsschenkel zur Aufnahme der Krampenrücken in bezug auf die Bandlängsachse V-förmig angeordnet sind, daß die Einformungen zur Aufnahme der umgebogenen Krampenspitzen in dem inneren Befestigungsschenkel in Richtung der Bandlängsachse verlaufen, daß jede Einformung in dem inneren Befestigungsschenkel zur Aufnahme nur einer einzigen umgebogenen Krampenspitze eingerichtet ist und dazu ein Eintrittsloch und ein Austrittsloch für die umgebogene Krampenspitze aufweist, und daß die Enden der umgebogenen Krampenspitzen nach dem Austreten aus den Austrittslöchern in an sich bekannter Weise in das betreffende Bandende eingedrungen sind oder sich zwischen dem Bandende und dem inneren Befestigungsschenkel befinden. - Innere Befestigungsschenkel meint im Rahmen der Erfindung die bei umlaufendem Transportband auf der Innenseite befindlichen Befestigungschenkel, die also im Umlenkbereich mit der betreffenden Umlenktrommel in Berührung kommen bzw. vorübergehend darauf aufliegen.

Nach Lehre der Erfindung unterscheidet sich der Verlauf der Krampenrücken - nämlich in V-Form von dem Verlauf der umgebogenen Krampenspitzen, die in Richtung der Bandlängsachse und damit Laufrichtung verlaufen. Dabei geht die Erfindung von der Erkenntnis aus, daß eine V-förmige Schrägstellung der Befestigungskrampen in dem äußeren Befestigungsschenkel eines Riemenverbinders dafür sorgt, daß eine einwandfreie Befestigung des betreffenden Bandendes zwischen beiden Befestigungsschenkeln erreicht wird, ohne daß ein Spalteffekt in Bandlängsrichtung in Kauf genommen werden muß. Dennoch wird zugleich eine Ausrichtung der umgebogenen Krampenspitzen an dem inneren Befestigungsschenkel in Bandlängsrichtung und folglich Bandlaufrichtung erreicht, so daß einwandfreier und verschleißarmer Bandumlauf um die Umlenktrommel in den Umkehrbereichen erzielt wird. - Nach bevorzugter Ausführungsform der erfindungsgemäßen Riemenverbinder ist weiter vorgesehen, daß der Querschnitt des die Befestigungsschenkel verbindenden Scharnierbogens kurvenförmig mit nach innen gewandter, d. h. dem Scharnierstab zugewandter, Wölbung ist.

Gegenstand der Erfindung ist auch eine Vorrichtung zum Befestigen von Riemenverbindern aus in Reihe angeordneten Verbinderklammern auf den Bandenden von Transportbändern, mit einem Eintreibstempel, der auf die Befestigungskrampen in der Weise einwirkt, daß die Befestigungskrampen das betreffende Bandende des Transportbandes und die das Bandende zwischen sich aufnehmenden Befestigungsschenkel durchdringen, und daß die auf einem Biegegesenk aufliegenden Krampenspitzen umgebogen werden. Dabei weist das Biegegesenk in regelmäßigen Abständen Führungszapfen auf, die zur gleichzeitigen Positionierung der Verbinderklammern und Führung eines den Eintreibstempel aufnehmenden Pressenkopfes eingerichtet sind, wobei das Biegegesenk Nuten mit nach innen gekrümmtem Nutengrund, daß heißt in Eintreibrichtung konkav gekrümmtem Nutengrund, zur Aufnahme und Führung der Krampenspitzen in das Austriffsloch am inneren Befestigungsschenkel aufweist.

Im folgenden wird die Erfindung anhand einer lediglich ein Ausführungsbeispiel darstellenden Zeichnung näher erläutert; es zeigen:
- Fig. 1: eine Teilaufsicht auf einen erfindungsgemäßen Riemenverbinder aus in Reihe angeordneten Verbinderklammern,
- Fig. 2: eine Ansicht der Figur 1 von unten,
- Fig. 3: einen Querschnitt der Fig. 1 entlang der Linie III-III,
- Fig. 4: einen schematischen Vertikalschnitt durch eine Vorrichtung zum Befestigen der erfindungsgemäßen Riemenverbinder,
- Fig. 5: ausschnittsweise das Biegegesenk für den Gegenstand nach Fig. 4,
- Fig. 6: eine Ansicht von unten auf den Pressenkopf nach Fig. 4, bei herausgezogenem Eintreibstempel,
- Fig. 7: einen teilweisen Schnitt durch das Biegegesenk nach Fig. 5 im Nutbereich,
- Fig. 8: eine Verbinderklammer im Querschnitt nach ihrer Befestigung auf dem Bandende eines Transportbandes und
- Fig. 9: einen schematischen Längsschnitt entlang der Linie IX-IX der Fig. 8 mit Darstellung der Verbindung zweier sich gegenüberliegender Verbinderklammern.

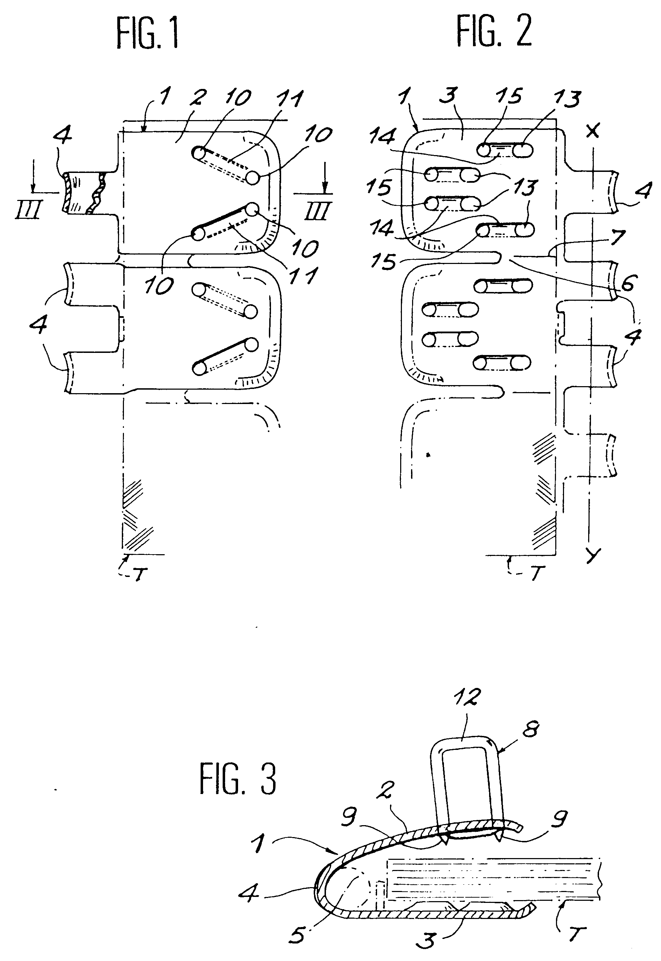

Wie oben erwähnt, zeigen die Figuren 1 und 2 Ansichten eines sehr kleinen Teils des erfindungsgemäßen Riemenverbinders aus in Reihe angeordneten Verbinderklammern 1 von oben bzw. von unten. Jede dieser Verbinderklammern 1 hat einen im wesentlichen U-förmigen Querschnitt, so daß sie, wie in Figur 3 dargestellt, beidseitig auf das Bandende eines Transportbandes T aufgesetzt werden kann. Jede Verbinderklammer 1 besteht aus zwei Befestigungsschenkeln, und zwar dem äußeren Befestigungsschenkel 2 und dem inneren Befestigungsschenkel 3. Dabei ist im Rahmen der Erfindung unter dem inneren Befestigungsschenkel 3 der bei umlaufendem Transportband T auf der Innenseite befindliche Befestigungsschenkel zu verstehen, der also im Umlenkbereich mit der betreffenden Umlenktrommel in Berühung kommen bzw. vorübergehend darauf aufliegen kann. Der zwischen den beiden Befestigungsschenkeln 2, 3, vorhandene gekrümmte Teil ist so ausgestanzt, daß bei jeder Verbinderklammer 1 ein oder zwei Scharnierbögen 4 entstehen. Wie aus den Figuren 1 und 2 ersichtlich, enthalten die Verbinderklammern 1 nacheinander angeordnete Scharnierbögen 4. Somit können zwei gegenüberliegende Reihen von Verbinderklammern 1 durch die Überlappung ihrer Scharnierbögen und Einstecken eines Scharnierstabes 5 in den durch die Überlappung der Scharnierbögen 4 entstehenden Kanal zusammengefügt werden.

Sämtliche Verbinderklammern 1 des erfindungsgemäßen Riemenverbinders sind in einem Arbeitsgang aus einem Metallstreifen hergestellt, der entsprechend zugeschnitten und umgebogen wird. Dabei sind von der Fläche des Metallstreifens, welcher zur Bildung des inneren Befestigungsschenkels 3 des erfindungsgemäßen Riemenverbinders vorgesehen ist, Verbindungsbrücken 6 zur Verbindung der Verbinderklammern übrig geblieben, die jeweils durch eine schwächere, später durchbrechbare Trennlinie 7 unterteilt sind. Die verschiedenen Verbinderklammern 1 sind, wie aus Figur 1 ersichtlich, auf gegenüberliegenden Seiten voneinander völlig unabhängig.

Für ihre spätere Befestigung auf einem Transportband T ist jede der Verbinderklammern 1 mit zwei verwendungsbereiten Befestigungskrampen 8 ausgerüstet. Dabei besteht jede dieser Befestigungskrampen 8 aus einem U-förmig gebogenen Metalldraht, dessen Krampenspitzen 9 in die Eintreiblöcher 10 im äußeren Befestigungsschenkel 2 einer jeden Verbinderklammer 1 eingedrückt werden. In dieser Position ragen die Befestigungskrampen 8 über die Verbinderklainmern 1 hinaus, wie in Figur 3 dargestellt.

Insofern ist jede Verbinderklammer 1 mit zwei verwendungsbereiten Befestigungskrampen 8 versehen. Die beiden Eintreiblöcher 10 für die Krampenspitzen 9 jeder Befestigungskrampe 8 sind schräg angeordnet, damit sie sich nicht auf der Bandlängsachse des Transportbandes T befinden. Wie aus Figur 1 ersichtlich, sind die entsprechenden Eintreiblöcher 10 im äußeren Befestigungsschenkel 2 jeder Verbinderklammer 1 V-förmig angeordnet. Außerdem sind die beiden Eintreiblöcher 10 zur Aufnahme der Krampenrücken 12 der Befestigungskrampen 8 durch Einformungen 11 verbunden, um der entsprechenden Befestigungskrampe 8 zumindest teilweise als Sitz zu dienen.

Gegenüber von jedem Eintreibloch 10 im äußeren Befestigungsschenkel 2 der Verbinderklanunern 1 ist fluchtend ein Eintrittsloch 13 mit etwas größerem Querschnitt als das Eintreibloch 10 vorgesehen. Das Eintrittsloch 13 ist dafür bestimmt, später die Krampenspitze 9 der Befestigungskrampe 8 aufzunehmen, die in das dem Eintrittsloch 13 gegenüberliegende Eintreibloch 10 eingeführt wird.

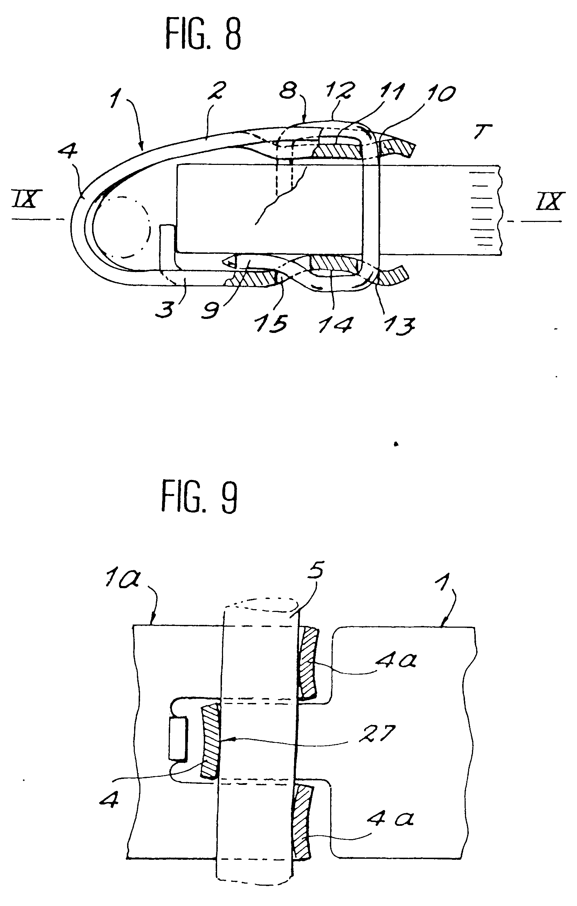

Jedes Eintrittsloch 13 ist erfindungsgemäß durch eine Einformung 14 mit einem Austrittsloch 15 verbunden. Wie anschließend erläutert werden wird, ist dieses Austrittsloch 15 zur Aufnahme der Krampenspitze 9 der jeweiligen Befestigungskrampe 8 bestimmt. Dabei steht die Krampenspitze 9 aus dem Eintrittsloch 13 soweit hervor, daß sie von neuem in das Innere der Verbinderklammer 1 eingeführt wird, wie dies in Figur 8 dargestellt ist. Es ist zweckmäßig, anzumerken, daß die Einformungen 14 im Verhältnis zur Position X-Y des Scharnierstabes 5 (Fig. 2) rechtwinklig angeordnet sind. Demzufolge befinden sich das Eintrittsloch 13 und das Austrittsloch 15 auf der Bandlängsachse des Transportbandes T.

Durch die Wiedereinführung der Krampenspitze 9 der Befestigungskrampen 8 in das Innere der Verbinderklammern 1 und die damit verbundene Verriegelung können die Befestigungskrampen 8 mit Hilfe einer sehr einfach konstruierten Vorrichtung eingetrieben werden. Dabei werden die Befestigungs-Krampen 8 mit einem Eintreibstempel, der von Hand mit einem Hammer oder einem ähnlichen Werkzeug die Befestigungskrampen 8 eintreibt, an Ort und Stelle befestigt. Zur Erzielung einer wirksamen Befestigung der Verbinderklammern 1 sind folglich hohe Drücke nicht erforderlich.

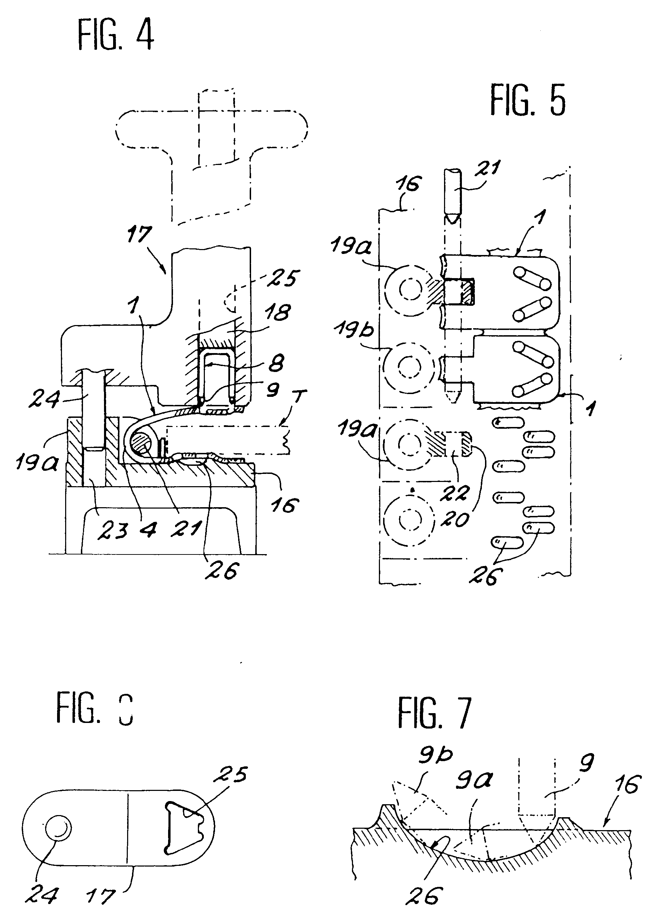

In den Figuren 4 bis 7 ist eine Vorrichtung zum Befestigen der erfindungsgemäßen Riemenverbinder aus in Reihe angeordneten Verbinderklainmern 1 dargestellt. Diese Vorrichtung enthält ein Biegegesenk 16 für die Auflage einer Reihe von Verbinderklammern 1 während ihrer Befestigung. Dabei dient das Biegegesenk 16 der Umbiegung der Krampenspitze 9 der Befestigungskrampen 8. Außerdem enthält die erfindungsgemäße Vorrichtung in Kombination mit dem Biegegesenk 16 einen beweglichen Pressenkopf 17, der als Führung für einen Eintreibstempel 18 zum Einpressen der Befestigungskrampen 8 dient; dieser Eintreibstempel 18 kann von Hand mit einem Hammer oder ähnlichem Werkzeug eingetrieben werden.

Auf der Oberfläche des Biegegesenkes 16 ist eine Reihe von Führungszapfen 19a und 19b wechselweise angeordnet, und zwar jede gegenüber der für eine Verbinderklammer 1 vorgesehenen Stelle. Die Führungszapfen 19a unterscheiden sich von den Führungszapfen 19b dadurch, daß sie einen vorstehenden Haken 20 enthalten, der dafür bestimmt ist, zwischen die Scharnierbögen 4 einer mit zwei Scharnierbögen 4 versehenen Verbinderklammer 1 einzurasten. Damit erzielt man eine genaue Positionierung sämtlicher Verbinderklammern 1 einer gleichen Reihe auf dem Biegegesenk 16. Eine gleichzeitig in die entsprechenden Scharnierbögen 4 und in ein zu diesem Zweck vorgesehenes Loch 22 im Haken 20 eingefädelte kleine metallische Stange 21 gewährleistet die Feststellung der Verbinderklammern 1.

Alle Führungszapfen 19a, 19b, enthalten eine nach oben offene Vertikalbohrung 23, die zur Aufnahme eines Zentrierzapfens 24 am beweglichen Pressenkopf 17 dient. Somit genügt es, jeweils diesen Zentrierzapfen 24 in das Innere einer der Vertikalbohrungen 23 einzuführen, damit der Pressenkopf 17 positioniert ist und der Eintreibstempel 18 die Festpressung der beiden Befestigungskrampen 8 an der entsprechenden Verbinderklammer 1 bewirken kann.

Es sollte weiter angeführt werden, daß der Eintreibstempel 18 einen trapezförmigen Querschnitt hat und damit die beiden Befestigungskrampen 8 einer zugehörigen Verbinderklammer 1 gleichzeitig einpressen kann. Aus diesem Grund besitzt der im Pressenkopf 17 vorgesehene Führungskanal 25 ebenfalls einen gleichartigen trapezförmigen Querschnitt.

Unterhalb der Stelle, an der die Einformungen 14 im inneren Befestigungsschenkel 3 vorgesehen sind, ist in der Oberfläche im Gesenk 16 eine sich in gleicher Richtung erstreckende Nut 26 angeordnet. Gemäß der Darstellung in Figur 7 ist jede dieser Nuten 26 im Querschnitt gesehen, mit nach innen gekrümmtem Nutengrund, d. h., in Eintreibrichtung der Befestigungskrampen 8 konkav, ausgeführt.

Wenn also eine der Krampenspitzen 9 einer Befestigungskrampe 8 wieder aus einem der Eintrittslöcher 13 des inneren Befestigungsschenkels 3 nach Durchgang durch das Transportband T herausragt, greift diese Krampenspitze 9 in eine der Nuten 26 des Biegegesenks 16 ein, wie dies in Figur 7 dargestellt ist. Dadurch wird die Krampenspitze 9 zunächst in die Form 9a, und dann in die Form 9b umgebogen, bis die Krampenspitze 9 durch das zugehörige Austrittsloch 15 des inneren Befestigungsschenkels 3 der Verbinderklammer 1 eintritt. Auf diese Weise ist die Krampenspitze 9 gewissermaßen gezwungen, von neuem in das Innere der Verbinderklammer 1 einzugreifen, was ihre Verriegelung an Ort und Stelle sicherstellt.

Je nach Länge der Krampenschenkel der verwendeten Befestigungskrampen 8 können ihre Krampenspitzen 9 dann entweder einfach durch das Transportband T hindurchgepreßt werden, oder sie befinden sich zwischen dem Transportband T und dem entsprechenden inneren Befestigungsschenkel 3 der jeweiligen Verbinderklammer 1, wie dies in Figur 8 dargestellt ist. In beiden Fällen ergibt sich dadurch eine so wirksame Verriegelung der Krampenspitzen 9 der Befestigungskrampen 8, daß sich die Befestigungskrampen 8 unter Einwirkung von auf die Verbinderklammern 1 einwirkenden Kräften nicht lösen können. Deshalb ist es möglich, eine wirksame Befestigung der erfindungsgemäßen Riemenverbinder bzw. Verbinderklammern 1 unter Anwendung einer sehr einfachen, von Hand zu betätigenden Eintreibvorrichtung nach den Darstellungen in den Figuren 4 bis 7 zu erzielen.

Außerdem muß beachtet werden, daß die Richtung der auf der Außenfläche der inneren Befestigungsschenkel angeordneten Einformungen 14 es ermöglicht, daß die Krampenspitzen 9 jeder Befestigungskrampe 8 in Richtung der Bandlängsachse des Transportbandes T angeordnet sind. Damit wird verhindert, daß die Krampenspitzen 9 der Befestigungskrampen 8 bei der Passage des Transportbandes T auf den Umlenktrommeln Abreißkräften ausgesetzt werden können.

Ein weiterer, schon erwähnter Vorteil der erfindungsgemäßen Verbinderklammern 1 besteht darin, daß die Durchbohrungen des Transportbandes T durch die Krampenschenkel einer jeden Befestigungskrampe 8 nicht in Richtung der Bandlängsachse des Transportbandes T angeordnet sind, und zwar aufgrund der Schrägstellung der Eintreiblöcher 10 und der Eintrittslöcher 13. Damit wird verhindert, daß im Inneren des Transportbandes T geschwächte Längslinien entstehen.

Die erfindungsgemäßen Verbinderklammern enthalten Scharnierbögen 4 mit kurvenförmigem Querschnitt und nach innen gewandter Wölbung, d. h. in Richtung auf den einsteckbaren Scharnierstab 5 (siehe Figur 9). Somit bewirken die von den Scharnierbögen 4, 4a der Verbinderklammern 1 auf den elastischen Scharnierstab 5 übertragenen Kräfte auf diesem elastischen Scharnierstab 5 eine Art Wellenbildung, sobald zwei gegenüberliegende Reihen sich ergänzender Verbinderklammern 1 und la miteinander gekuppelt sind. Auf diese Weise wird der Scharnierstab 5 vor jedem Kontakt mit den scharfen Kanten der Scharnierbögen 4 und 4a geschützt, werden gerade deshalb Verschleiß- und Abschergefahren, die durch scharfe Kanten entstehen können, vermieden.

## Patentansprüche

1. Riemenverbinder zum Verbinden der Bandenden von Transportbändern (T) oder dergleichen aus in Reihe angeordneten Verbinderklammern (1) mit jeweils einem U-förmigen Querschnitt unter Bildung von zwei das betreffende Bandende zwischen sich aufnehmenden Befestigungsschenkeln (2, 3) und mit zumindest einem die Befestigungsschenkel (2, 3) verbindenden Scharnierbogen (4) zur Aufnahme eines Scharnierstabes (5), wobei die Befestigungsschenkel (2, 3) fluchtende Eintreiblöcher (10, 13) zum Eintreiben von U-förmigen Befestigungskrampen (8) aufweisen, welche das betreffende Bandende durchdringen und wobei die Eintreiblöcher (10, 13) über zur Bandlängsachse schräg gestellte rillenartige Einformungen (11, 14) zur Aufnahme der Krampenrücken (12) und der nach dem Eintreiben umgebogene Krampenspitzen (9) paarweise miteinander verbunden sind, **dadurch** **ge****kennzeichnet,** daß die Einformungen (11) in dem äußeren Befestigungsschenkel (2) zur Aufnahme der Krampenrücken (12) in bezug auf die Bandlängsachse V-förmig angeordent sind, daß die Einformungen (14) zur Aufnahme der umgebogenen Krampenspitzen (9) in dem inneren Befestigungsschenkel (3) in Richtung der Bandlängsachse verlaufen, daß jede Einformung (14) in dem inneren Befestigungsschenkel (3) zur Aufnahme nur einer einzigen umgebogenen Krampenspitze (9) eingerichtet ist und dazu ein Eintrittsloch (13) und ein Austrittsloch (15) für die umgebogenen Krampenspitze (9) aufweist, und daß die Enden der umgebogenen Krampenspitzen (9) nach dem Austreten aus den Austrittslöchern (15) in an sich bekannter Weise in das betreffende Bandende des Transportbandes (T) eingedrungen sind oder sich zwischen dem Bandende des Transportbandes (T) und dem inneren Befestigungsschenkel (3) befinden.

2. Riemenverbinder nach Anspruch 1, dadurch gekennzeichnet, daß der Querschnitt des die Befestigungsschenkel (2, 3) verbindenden Scharnierbogens (4) kurvenförmig mit nach innen gewandter Wölbung ist.

3. Vorrichtung zum Befestigen von Riemenverbindern aus in Reihe angeordneten Verbinderklammern (1) auf den Bandenden von Transportbändern (T) nach einem der Ansprüche 1 oder 2, mit einem Eintreibstempel (18) der auf die Befestigungskrampen (8) in der Weise einwirkt, daß die Befestigungskrampen (8) das betreffende Bandende des Transportbandes (T) und die das Bandende zwischen sich aufnehmenden Befestigungsschenkel (2, 3) durchdringen und daß die auf einem Biegegesenk (16) aufliegenden Krampenspitzen umgebogen werden, dadurch gekennzeichnet, daß das Biegegesenk (16) in regelmäßigen Abständen Führungszapfen (19a, 19b) aufweist, die zur gleichzeitigen Positionierung der Verbinderklammern (1) und Führung eines den Eintreibstempel (18) aufnehmenden Pressenkopfes (17) eingerichtet sind, und daß das Biegegesenk (16) Nuten (26) mit nach innen gekrümmtem Nutengrund zur Aufnahme und Führung der Krampenspitzen (9) in das Austrittsloch (15) am inneren Befestigungsschenkel (3) aufweist.

## Claims

1. A belt connector for connecting the belt ends of conveyor belts (T) or the like, comprising connecting clips (1) arranged in a row, each with a U-shaped cross-section forming two fastening limbs (2, 3) receiving the respective belt end between them and with at least one hinge bow (4) for receiving a hinge pin (5) and connecting the fastening limbs (2, 3), wherein the fastening limbs (2, 3) have aligned driving-in holes (10, 13) for driving in U-shaped fastening staples (8) which penetrate the respective belt end, and wherein the driving-in holes (10, 13) are connected to each other in pairs via channel-like formations (11, 14) placed obliquely to the longitudinal axis of the belt for receiving the staple backs (12) and the staple points (9) which are bent round after driving in, characterised in that the formations (11) in the outer fastening limb (2) for receiving the staple backs (12) are arranged in a V-shape with respect to the longitudinal axis of the belt, that the formations (14) in the inner fastening limb (3) for receiving the bent round staple points (9) run in the direction of the longitudinal axis of the belt, that each formation (14) in the inner fastening limb (3) is designed to receive only a single bent-round staple point (9) and for this purpose has an inlet hole (13) and an outlet hole (15) for the bent-round staple point (9), and that after emerging from the outlet holes (15) the ends of the bent-round staple points (9) have penetrated the respective belt end of the conveyor belt (T) in the manner known in the art or are situated between the belt end of the conveyor belt (T) and the inner fastening limb (3).

2. A belt connector according to claim 1, characterised in that the cross-section of the hinge bow (4) connecting the fastening limbs (2, 3) is curve-shaped with inwardly facing convexity.

3. An apparatus for fastening belt connectors comprising connecting clips (1) arranged in a row to the belt ends of conveyor belts (T) according to one of claims 1 or 2, with a driving-in punch (18) which acts on the fastening staples (8) in such a way that the fastening staples (8) penetrate the respective belt end of the conveyor belt (T) and the fastening limbs (2, 3) which receive the belt end between them, and that the staple points, which rest on a bending anvil (16), are bent round, characterised in that the bending anvil (16) has guide pegs (19a, 19b) at regular intervals, which are designed for simultaneously positioning the connecting clips (1) and guiding a head of a press (17) which accommodates the driving-in punch (18), and that the bending anvil (16) has grooves (26) with inwardly curved groove bases for receiving the staple points (9) and for guiding them into the outlet hole (15) on the inner fastening limb (3).

## Revendications

1. Agrafe de jonction pour joindre les extrémités de tapis transporteurs (T) ou analogues au moyen d' une rangée de telles agrafes (1) dont chacune présente une section transversale en forme de U avec formation de deux branches de fixation (2, 3) recevant entre elles l'extrémité correspondante du tapis et avec au moins un charnon de charnière (4) reliant entre elles les branches de fixation (2, 3) pour recevoir un axe de charnière (5), les branches de fixation (2, 3) présentant des trous alignés (10, 13) pour l'insertion de crampons de fixation en forme de U (8) qui traversent l'extrémité correspondante du tapis, et dans laquelle les trous d'insertion (10, 13) sont reliés l'un à l'autre par paires par des gorges en creux (11, 14) disposées obliquement par rapport à l'axe longitudinal du tapis, pour recevoir les dos (12) des crampons et les pointes (9) de crampon repliées après leur insertion, caractérisée en ce que les gorges en creux (11) prévues sur la branche de fixation externe (2) pour recevoir les dos (12) des crampons sont disposées en V par rapport à l'axe longitudinal du tapis, en ce que les gorges en creux (14) prévues sur la branche de fixation interne (3) pour recevoir les pointes repliées (9) des crampons s'étendent dans le sens de l'axe longitudinal du tapis, en ce que chaque gorge en creux (14) ménagée dans la branche de fixation interne (3) est agencée pour recevoir uniquement une seule pointes repliée (9) d'un crampon et présente en outre un trou d'entrée (13) et un trou de sortie (15) pour la pointe repliée (9) de ce crampon, et en ce que les extrémités des pointes repliées (9) des crampons, après leur sortie hors des trous de sortie (15), sont enfoncées de manière connue en soi dans l'extrémité correspondante (T) du tapis, ou bien se trouvent entre l'extrémité (T) du tapis et la branche de fixation intérieure (3).

2. Agrafe de jonction selon la revendication 1, caractérisée en ce que la section transversale du charnon (4) de celle-ci présente une forme courbe tournant sa convexité vers l'intérieur.

3. Appareil pour la pose d'agrafes formant une rangée d'agrafes (1) sur les extrémités de tapis transporteurs (T) selon la revendication 1 ou 2, comprenant un poinçon d'enfoncement (18) agissant sur les crampons de fixation (8) de telle manière que ceux-ci traversent l'extrémité correspondante du tapis transporteur (T) ainsi que les branches de fixation (2, 3) recevant entre elles l'extrémité du tapis, et que les pointes de crampon disposées sur une matrice à plier (16) soient pliées, caractérisé en ce que la matrice à plier (16) porte une série de protubérances (19a, 19b) régulièrement espacées et agencées à la fois pour assurer le positionnement des crampons (1) et le guidage d'une tête de presse (17) recevant le poinçon (18)), et en ce que la matrice à plier (16) comporte des rainures (26) ayant des fonds incurvés vers l'intérieur afin de recevoir et de guider les pointes (9) des crampons dans le trou de sortie (15) sur la branche de fixation interne (3).
